Europäisches Patentamt

European Patent Office

Office européen des brevets

(11) Veröffentlichungsnummer: **0 291 837**
**A1**

## (12) EUROPÄISCHE PATENTANMELDUNG

(21) Anmeldenummer: **88107563.4**

(22) Anmeldetag: **11.05.88**

(51) Int. Cl.⁴: **A01G 25/09**

(30) Priorität: **12.05.87 IT 1771087**

(43) Veröffentlichungstag der Anmeldung:
**23.11.88 Patentblatt 88/47**

(84) Benannte Vertragsstaaten:
**AT DE ES FR GR IT**

(71) Anmelder: **Ciurlo, Ugo**
**Monte S. Quirico**
**I-55100 Lucca(IT)**

(72) Erfinder: **Ciurlo, Ugo**
**Monte S. Quirico**
**I-55100 Lucca(IT)**

(74) Vertreter: **Mayer, Hans Benno, Dipl.-Ing.**
**Via dell'Orso 7/A**
**I-20121 Milano(IT)**

(54) Bewässerungseinrichtung für spalierartig angeordnete Pflanzenreihen.

(57) Die Erfindung betrifft eine Bewaesserungseinrichtung fuer spalierartig angeordnete Pflanzenreihen (8), wobei es die Einrichtung erlaubt, die erforderlichen Bewaesserungsvorgaenge gleichmaessig und in einem einzigen Durchlauf an den spalierartigen Pflanzenkulturen (8) vorzunehmen, dies unter Vorsehung einer tunnelartigen Bewaesserungsvorrichtung (1), die an die Abmessungen der zu bewaessernden Pflanzenkultur (8) angepasst werden kann.

In vorteilhafter Weise erlaubt die Einrichtung eine Bewaesserung sowohl der Aussenflaeche als auch des Innenraumes der spalierartig vorgesehenen Pflanzenreihe (8).

FIG.1

## "Bewaesserungseinrichtung fuer spalierartig angeordnete Pflanzenreihen"

Die vorstehende Erfindung betrifft eine Vorrichtung zum Bewaessern einer spalierartigen Pflanzenreihe durch einmaliges Befahren der zu behandelnden Pflanzenkultur, wobei sowohl die Aussenflaechen als auch die Innenraeume der spalierartig angeordneten Pflanzenreihen unter Zuhilfenahme einer fahrbahren Landmaschine bewaessert wird.

Es ist bekannt, Pflanzenkulturen oder Anpflanzungen allgemein, die in Reihe oder spalierartig angeordnet sind, von Hand zu bewaessern. Fuer diesen Vorgang sind Spruehvorrichtungen bekannt geworden, die an fahrbaren Landmaschinen montiert werden. Diese bekannten Bewaesserungseinrichtungen weisen Spruehduesen auf, die einen Spruehnebel bilden, der auf die zu bewaessernden Pflanzen einwirkt. Dabei wird beim Befahren der Pflanzenreihe aber nur eine Seite der Anpflanzung mit Fluessigkeit beeinflusst. Bei der verspruehten Fluessigkeit kann es sich um waessrige Loesungen handeln, in denen Duenger oder andere Wirkstoffe, wie z.B. Pestizide geloest sind.

Bei Verwendung der bekannten Einrichtungen ist es erforderlich, die Pflanzenreihe zweimal zu befahren, um diese auf beiden Seiten durch den Spruehvorgang zu bewaessern.

Bei Einsatz der bekannten Vorrichtungen wird in nachteiliger Weise der Kronenbereich der Pflanzenreihe nur sehr spaerlich oder ueberhaupt nicht durch den Besprueh- oder Bewaesserungsvorgang beeinflusst. Der Kronenbereich stellt aber bekanntlich jenen Teil der Pflanze dar, der hauptsaechlich von zarten Sprossen gebildet ist und daher besonders gut besprueht werden muesste, um zu vermeiden, dass dieser Bereich mit seinen jungen, frischen Knospen in unerwuenschter Weise von Insekten oder Krankheitspilzen befallen wird.

Desweiteren ist bei den bekannten Vorrichtungen, bei denen die Bespruehung nur von einer Seite der Pflanzenreihe erfolgt, festzustellen, dass die Verspruehung der Bewaesserungssubstanz, auch wenn eine genaue Dosierung erfolgt, ihre Wirkung nur auf der Aussenflaeche des Blattwerkes des Pflanzenkultur entfaltet und nur in Ausnahmefaellen als Nebenwirkung auch den inneren Raum der Pflanze beeinflusst.

Es ist auch bekannt, dass zur Erzielung einer besseren und vor allem wirkungsvolleren Bespruehung dieser Vorgang stets an windarmen Tagen durchzufuehren ist, um somit kleinstmoegliche Dispersion der Bewaesserungsfluessigkeit zu gewaehrleisten. Ferner soll das Risiko einer Dispersion der oft gesundheitsschaedlichen Wirkstoffe in der freien Atmosphaere vermieden werden, besonders um einen Kontakt zwischen Wirkstoffen und den Bedienungspersonen der Einrichtung zu vermeiden.

Auf jeden Fall, auch wenn der Bewaesserungsvorgang mit den bekannten Vorrichtungen an windstillen Tagen durchgefuehrt wird, ist bei diesen Einrichtungen festzustellen, dass die in der verspruehten waessrigen Loesung enthaltenen Wirkstoffe nicht vollstaendig das Blattwerk der Pflanzenkultur erreichen, sondern ein Teil der Wirkstoffe stets ueber einen gewissen Zeitraum frei in der Luft schwebt und sich nach einer gewissen Zeit auf dem Boden ablegt mit der Gefahr, das Erdreich in unerwuenschter Weise zu verseuchen.

Aufgabe der vorstehenden Erfindung ist es, die Nachteile des Standes der Technik zu vermeiden und eine neue Bewaesserungsvorrichtung der beschriebenen Art zu schaffen, mit der Pflanzenreihen durch einmaliges Befahren vollstaendig und von allen Seiten dem Bewaesserungsvorgang ausgesetzt werden und durch einen gleichmaessigen Bewaesserungsvorgang sowohl die Aussenflaechen als auch der Innenraum der Pflanzenreihen bewaesserbar sind, und bei diesem Vorgang eine unerwuenschte Dispersion der Wirkstoffe im umliegenden Luftraum und ferner ein Ablagern der verspruehten Wirkstoffe im Bodenbereich vermieden wird, und die Gefahr einer Beruehrung zwischen verspruehten Wirkstoffen und der Bedienungsperson der Landmaschine ausgeschlossen ist.

Die erfindungsgemaesse Aufgabe wird durch eine Bewaesserungsvorrichtung, die mit einem landwirtschafltichen Fahrzeug verbunden ist, dadurch geloest, dass an einem Aufnahmegestell des Fahrzeuges ein kanalartiges Gehaeuse angeordnet ist, das in einer horizontalen Ebene als auch in einer vertikalen Ebene verschiebbar angeordnet ist und die Pflanzenreihe auf beiden Seiten und an der Oberseite umgibt und dass an den Innenwaenden des kanalartigen Gehaeuses auf die Pflanzenreihe gerichtete Spruehduesen angeordnet sind, die mit einem Leitungssystem zur Zufuhr der zu verspruehenden Fluessigkeit in Verbindung stehen.

Die erfindungsgemaesse Einrichtung zum Bewaessern von Pflanzenreihen, die tunnelfoermig ausgebildet ist, wird an einer selbstfahrenden landwirtschaftlichen Maschine angebracht und uebergreift in vorteilhafter Weise, in Form eines umgestuerzten "U" die Pflanzenreihe der Kultur ueber die gesamte Tunnellaenge.

Es wird somit eine die Pflanzenreihe umhuellende Schutzhaube gebildet, die, ueber die auf der Innenseite des Tunnels angeordneten Spruehduesen, eine wirkungsvolle Bespruehung der Pflanzenreihe erlaubt. Dabei wird durch den Tunnel um die Pflanzenreihe eine Schutzhuelle gebildet, die die Bewaesserungsloesung von aussenstehenden Einflussgroessen, wie Wind oder Regen schuetzt, was eine unguenstige Beeinflussung des Bewaesserungsvorganges ausschliesst. Der Bewaesserungsvorgang kann somit auch an windigen oder regnerischen Tagen durchgefuehrt werden, da er in einer abgeschlossenen und geschuetzten Atmosphaere erfolgt, die nicht von besonderen Witterungsverhaeltnissen beeinflusst wird.

Im inneren des Tunnels, der geeignete Laenge aufweist, erfolgt ein gleichmaessiger und sehr intensiver Bewaesserungsvorgang. Der Grossteil des verspruehten Materials lagert sich auf dem Blattwerk der Pflanzen ab, dies nicht nur auf den Aussenseiten der Kultur, sondern, dank des geschlossenen Bespruehungsraumes entsteht eine gesaettigte Feuchtatmosphaere, die mit dem zu verspruehenden Mittel angereichert ist. Es wird eine dampfartige, saunaaehnliche Atmosphaere gebildet, die ein Einwirken der verspruehten Loesung auch auf die Innenteile der Pflanzenkultur, z.B. duenne Aeste, Triebe und innenliegendes Blattwerk ermoeglicht. Damit wird das gesamte Pflanzenvolumen der Kultur beeinflusst.

Durch das gesamthafte Einwirken der Pflanzenkultur, d.h. durch ein Beeinflussen aller Seiten der Kultur, kann der Bespruehvorgang mit einem einzigen Befahren der Kultur und erheblicher Zeiteinsparung und groesserem Wirkungseffekt durchgefuehrt werden.

Die besondere Form des Tunnnels nach Art eines umgestuerzten "U" erlaubt es, die Spruehduesen auch auf der Innenseite des Tunnelhimmels vorzusehen. Daher kann auch der obere Bereich der Pflanzenreihe von oben nach unten besprueht werden, wodurch eine vollstaendige Beeinflussung und Bespruehung auch des Kronenbereichs der Pflanzen moeglich ist. Bekanntlich sind in diesem Bereich besonders viel zarte Knospen, Sprossen und Triebe vorhanden, die einem Schaedlingsbefall besonders ausgesetzt sind.

Durch die erfindungsgemaesse Vorrichtung wird sichergestellt, dass der Grossteil, der durch die Duesen verspruehten Flussigkeitsmenge fuer den Behandlungsvorgang eingesetzt wird und nicht nutzlos in die freie Umgebung versprueht wird. Dies fuehrt zu einer erheblichen Einsparung an Spruehfluessigkeit gegenueber herkoemmlichen Bewaesserungs- und Bespruehverfahren.

Da fast keine Dispersion der verspruehten Behandlungsfluessigkeit in der umgebenden Atmosphaere eintritt, wird durch Verwendung der erfindungsgemaessen Vorrichtung das Risiko einer unerwuenschten Bodenverseuchung ausgeschlossen.

Ferner ist der Bedienungsmann des landwirtschaftlichen Fahrzeuges vollkommen vor den teilweise fuer den menschlichen Organismus - schaedlichen Bestandteilen der verspruehten Loesung, sei es durch Hautkontakt sei es durch Einatmen, geschuetzt.

Die erfindungsgemaesse Bewaesserungseinrichtung wird nun anhand einiger Ausfuehrungsbeispiele genauer beschrieben und in den Zeichnungen dargestellt. Es zeigen:

Fig. 1 ein Ausfuehrungsbeispiel der erfindungsgemaessen Vorrichtung zusammen mit einem landwirtschaftlichen Fahrzeug in Vorderansicht;

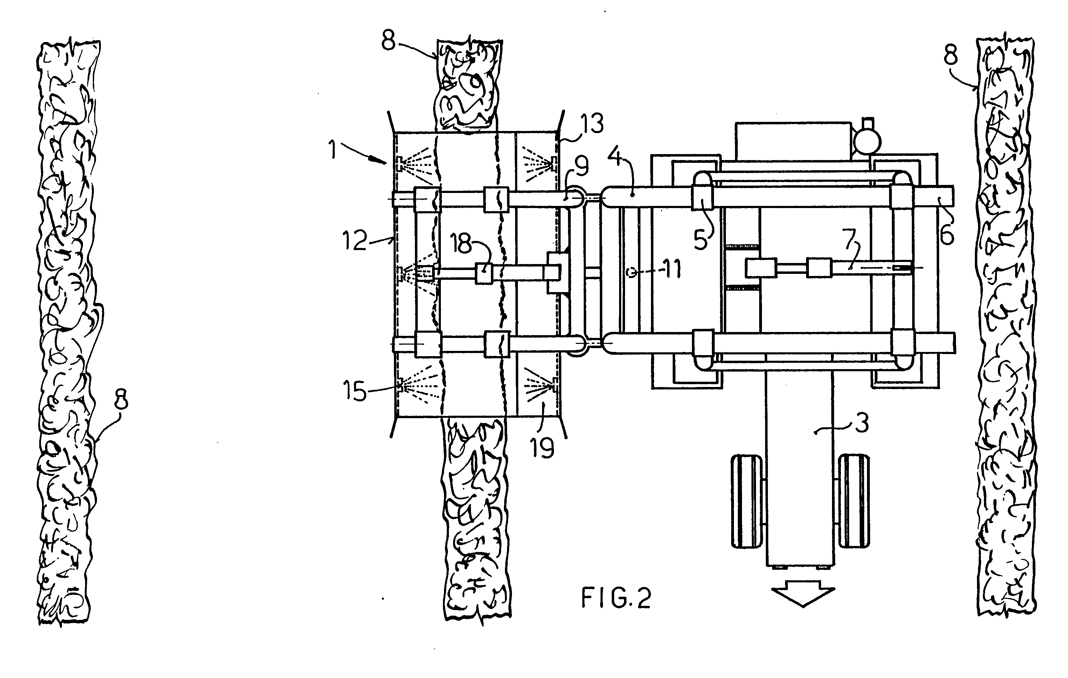

Fig. 2 die Vorrichtung gemaess Fig. 1 in Draufsicht;

Fig. 3 eine weitere Ausfuehrungsform der Bewaesserungsvorrichtung zusammen mit dem landwirtschaftlichen Zuggeraet in einer Vorderansicht;

Fig. 4 eine weitere Ausfuehrungsform der Bewaesserungsvorrichtung in Vorderansicht; und

Fig. 5 eine weitere Ausfuehrungsform der Bewaesserungsvorrichtung zusammen mit dem landwirtschaftlichen Zuggeraet in einer Draufsicht.

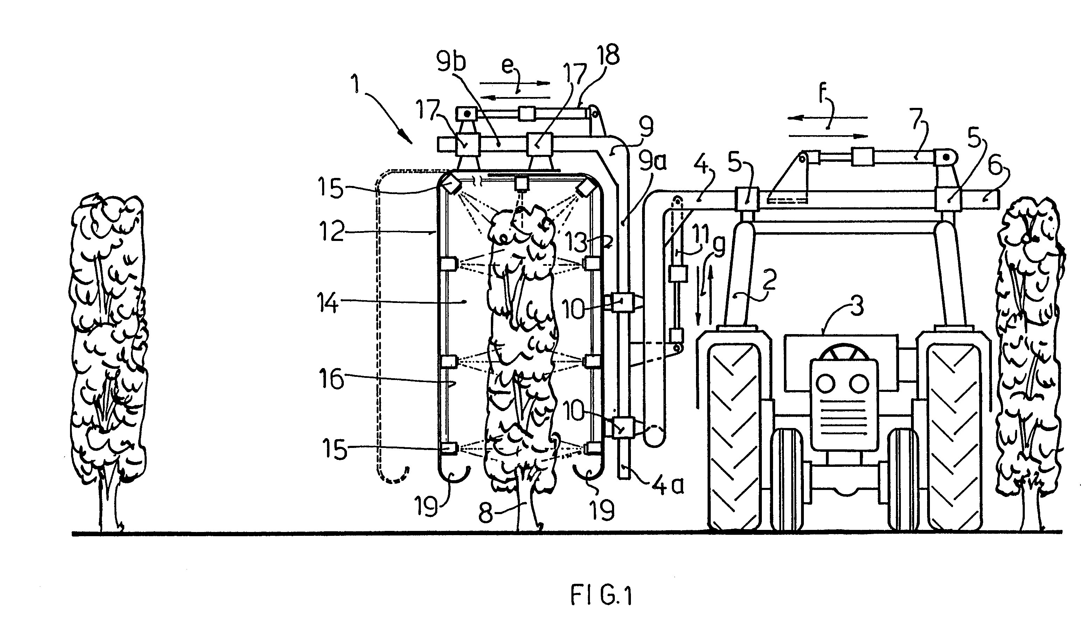

Wie der Fig. 1 zu entnehmen ist, wird die gesamthaft mit 1 bezeichnete Spruehvorrichtung an einem Halterahmen 2 eines landwirtschaftlichen Zuggeraetes, z.B. eines Traktors 3, unter Zuhilfenahme eines Aufhaengerahmens 4 befestigt.

Mit dem Rahmen 2 des Traktors 3 sind Gleitfuehrungen 5 verbunden, die horizontal angeordnete Bauteile, z.B. Halterohre 6 aufnehmen. Diese sind in einer horizontalen Ebene (Pfeile f) verschiebbar.

Durch die Moeglichkeit, die Aufhaengung 4 in einer horizontalen Ebene, z.B. unter Zuhilfenahme eines Hydraulikzylinders 7 in Richtung der Pfeile f hin- und her zu verschieben, wird der gesamten Bewaesserungseinrichtung 1 die Moeglichkeit gegeben, sich an die zu bewaessernde Pflanzenreihe 8 lagemaessig anzupassen. Dies sowohl bei Einfahren in die Pflanzenreihe 8 als auch bei Durchfuehren des Bewaesserungsvorganges, d.h. das Anpassen der Bewaesserungseinrichtung 1 an die Pflanzenreihe 8 kann unabhaengig von der Fahrbewegung der landwirtschaftlichen Maschine 3 erfolgen.

In vorteilhafter Weise kann der Zylinder 7 z.B. vom Armaturenbrett des Taktors 3 betaetigt werden.

Die Bewaesserungseinrichtung, die gesamthaft mit 1 gekennzeichnet wurde, steht ueber ein L-foermig ausgebildetes Gestell 9 mit dem Rahmen 4 in Wirkverbindung. Dazu sind an der senkrechten Strebe 4a des Rahmens 4 Gleitlager 10 vorgesehen, in denen der senkrechte Teil 9a des Gestells 9 in Richtung der Pfeile (g) hin- und herverschiebbar gelagert ist. Der Rahmen 9 wird in Richtung der Pfeile (g) unter Zuhilfenahme eines Hydraulikkolbens 11 verschoben. Auch dieser Hydraulikkolben 11 ist in vorteilhafter Weise vom Armaturenbrett des Traktors 3 steuerbar.

Die eigentliche Bewaesserungsvorrichtung besteht aus zwei im wesentlichen L-foermig ausgebildeten Wandteilen 12 und 13, die gemeinsam einen U-foermig, nach unten offenen Kanal 14 bilden. Im Inneren des Kanals 14 sind Spruehduesen 15 angeordnet, die ueber eine Schlauchleitung 16 mit der zu verspruehenden Fluessigkeit beschickt werden.

Das Wandteil 13 ist ueber die Gleitlager 10 fest mit dem Rahmenteil 4a verbunden. Das Wandteil 12 ist an seiner Oberseite hingegen an Gleitlagern 17 befestigt, die auf dem horizontal angeordneten Gestellteil 9b angeordnet sind.

Durch Vorsehen eines Betaetigungszylinders 18 wird die Moeglichkeit geschaffen, das Wandteil 12 in Richtung der Pfeile (e) gegeueber dem Wandteil 13 zu verschieben, um somit ein Anpassen an die Breite des Pflanzenreihe 8 vorzunehmen.

Die beiden L-foermigen Wandteile 12 und 13, die sich an ihrer Oberseite ueberdecken und den Bewaesserungstunnel 14 bilden, bestehen aus leichtem Material, das wasserundurchlaessig ist und somit ein Durchdringen der von den Duesen 15 verspruehten Fluessigkeit vermeide. Die Form der Tunnelwaende 12 und 13 ist deratig gewaehlt, dass ein haubenfoermiges Gebilde entsteht, das die Kronen sowie die Seiten der zu bewaessernden Pflanzenreihe 8 ummantelt. Zum Erdboden und zum Wurzelwerk hin ist die tunnelartige Kammer 14 offen ausgebildet.

In vorteilhafter Weise sind die unteren Enden der Waende 12 und 13 kanalfoermig nach innen gebogen und bilden Auffangkanaele 19 fuer die nach unten ablaufende oder absinkende verspruehte Fluessigkeit. Die nicht am Blattwerk der Pflanzenreihe 8 abgelagerten Fluessigkeitstroepfchen lagern sich an der Innenseite der Waende 12 und 13 ab. Sobald diese tropfenfoermigen Ablagerungen ihren Saettigungsgrad erreicht haben, fliessen sie an den Tunnelwaenden nach unten ab, wo sie durch die Kanaele 19 aufgefangen werden. Ueber einen Filter (nicht dargestellt) wird die aufgefangene Fluesigkeit von einer doppelt wirkenden Pumpe 20 in einen Vorratsbehaelter 21 zurueckbefoerdert, um erneut fuer den Bewaesserungsvorgang zur Verfuegung zu stehen.

Die auf der Innenseite des Bespruehungsraumes 14 vorgesehenen Duesen 15 sind einstellbar gegenueber der Pflanzenreihe 8 vorgesehen. Ueber flexible Rohrleitungen (nicht dargestellt), und ueber eine Sammelleitung, die mit der Pumpe und dem Vorratsbehaelter 21 in Verbindung steht, wird den Spruehduesen 15 die zu verspruehende Fluessigkeit in der gewuenschten Menge und mit dem gewuenschten Druck zugefuehrt.

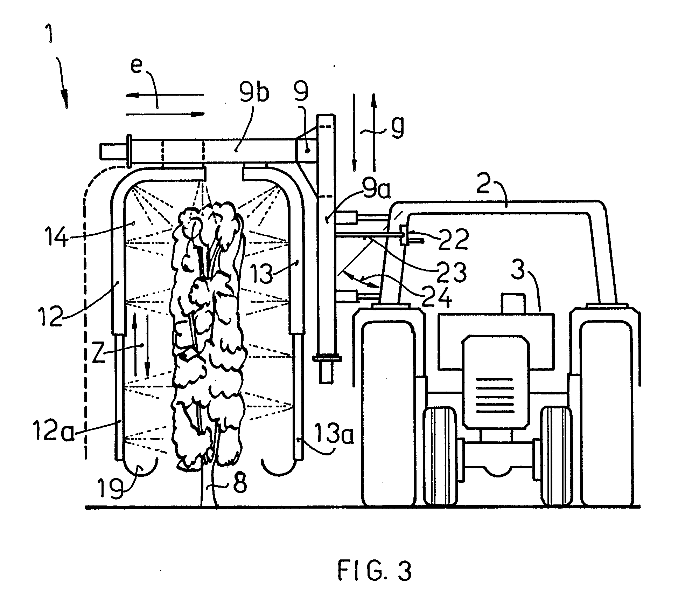

Die in der Fig. 3 dargestellte Bewaesserungsvorrichtung 1 weist ein senkrecht angeordnetes Gestell 9a auf, das mit dem Rahmen 2 des Traktors 3, in vorteilhafter Weise gelenkig verbunden ist. An der Aussenseite oder im Inneren des Rohrrahmens 9a sind z.B. Kolbenzylindereinheiten (nicht dargestellt) vorgesehen, die ein Verschieben des Gestelles 9 in Richtung der Pfeile (g) ermoeglichen. Der horizontal zum Rahmen 9a angeordnete Rahmenarm 9b weist ebenfalls Antriebskolben auf, die ein Verschieben des Wandteiles 12 gegenueber dem Wandteil 13 in Richtung der Pfeile (e) erlauben. Das obere Teilstueck des Rahmen 12 und 13 kann rohrfoermig oder kammerartig ausgebildet sein. Die unteren Teilstuecke 12a und 13a sind teleskopartig montiert, um z.B. durch die Kolbenzylindereinheiten (nicht dargestellt), eine Hoehenverschiebung der unteren Wandteile 12a und 13a in Richtung der Pfeile (z) vorzunehmen.

In vorteilhafter Weise steht das Gestell oder der Rahmen 9 mit einem Handrad 22 in Wirkverbindung. Das Handrad 22 ist an einer Gewindespindel 23 befestigt, die mit einer Gewindebohrung im Rahmenarm 9a in Wirkverbindung steht. Durch Betaetigen des Handrades 22 kann somit eine Verschwenkung des Rahmengestelles 9 und somit der Bewaesserungskammer 14 um einen Schwenkwinkel 24 erfolgen, dies ermoeglicht ein Anpassen an die Pflanzenreihe 8.

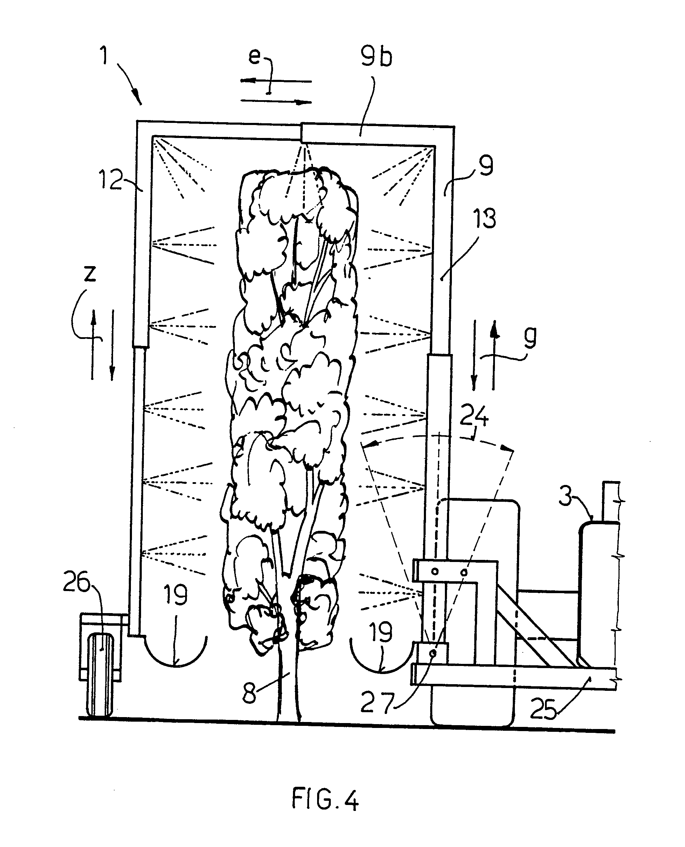

Eine weitere Moeglichkeit der Ausgestaltung der Bewaesserungsvorrichtung 1 ist in Fig. 4 dargestellt. Hier weist das landwirtschaftliche Fahrzeug 3 in Bodennaehe ein Aufnahmegestell 25 auf, das ein teleskopartiges Rahmengestell 9 aufnimmt. Der Rahmen 9 kann unter Zuhilfenahme von Kolbenzylindereinheiten (nicht dargesellt) in Richtung der Pfeile (g) in seiner Arbeitshoehe verstellt werden.

Desweiteren kann der teleskopartig ausgebildete und horizontal angeordnete Arm 9b in Richtung der Pfeile (e) verschoben werden, um somit ein Anpassen an die Breite der Pflanzenreihe 8 zu ermoeglichen. In vorteilhafter Weise ist auch das Gestellteil 12 teleskopartig ausgebildet, um ein Verstellen und eine Hoehenanpassung in Richtung der Pfeile (z) zu ermoeglichen.

Sowohl das Wandteil 12 als auch das Wandteil 13 weisen an ihrer Unterseite die bereits erwaehnten Abflusskanaele 19 zum Auffangen der nicht auf dem Blattwerk der Pflanzenreihe 8 abgelegten Fluessigkeit auf.

In vorteilhafter Weise ist dem Wandteil 12 eine Laufrolle 26 zugeordnet.

Durch Vorsehung eines Schwenkpunktes 27 besteht die Moeglichkeit, die gesamte Einrichtung 1 um einen Winkel 24 zu verschwenken. Dazu ist in vorteilhafter Weise die Einrichtung 1 mit geeigneten Schwnekkolben (nicht dargestellt) ausgeruestet.

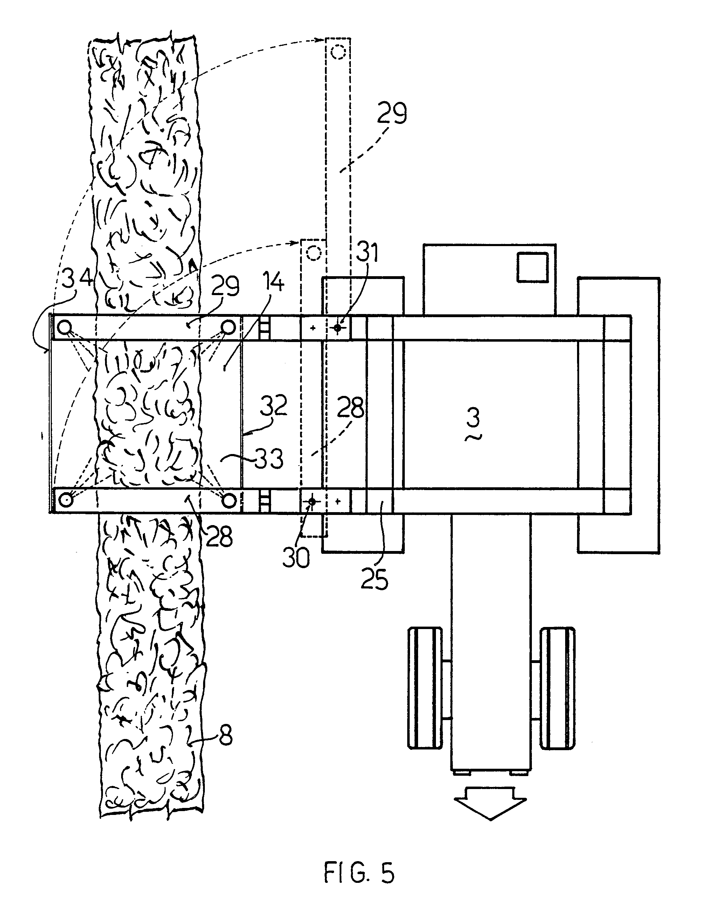

Entsprechend dem in Fig. 5 dargestellten Ausfuehrungsbeispiel, ist der Traktor 3 an einem Haltegestell 25 mit seitlich angeordneten Rahmenteilen 28 und 29 zur Bildung des Tunnels 14 bestueckt. Diese Rahmenteile 28, 29 sind um Schwenkpunkte 30 und 31, aus der mit durchgehenden Linien dargestellten Arbeitsstellung, in eine mit gestrichtelten Linien dargestellte Ruhestellung verschwenkbar. Damit wird der Platzbedarf des Bewaesserungstunnels 14 fuer den Transport oder das Befahren von Strassen wesentlich verringert. Die Rahmen 28 und 29 weisen in bekannter Weise Spruehduesen 15 auf. Um die Rahmenteile 28 und 29 in Arbeitsstellung auf der zum Traktor 3 hin gerichteten Seite, auf den aussenliegenden Seiten und dem Kammerhimmel dicht abzuschliesen, sind am Gestell 28, 29 einhaengbare Kunststoffplanen 32, 33 und 34 vorgesehen, die bei Arbeitsstellung der Vorrichtung 1 eine geschlossene Spruehkammer 14 bilden.

## Ansprüche

1. Bewaesserungseinrichtung fuer spalierartig angeordnete Pflanzenreihen, in Verbindung mit einem landwirtschaftichen Fahrzeug, **dadurch. gekennzeichnet**. dass an einem Anfnahmegestell (4, 6) des Fahrzeuges (13) ein kanalartiges Gehaeuse (1) angeordnet ist, das in einer horizontalen Ebene (e) als auch in einer vertikale Ebene (g) verschiebbar angeordnet ist und die Pflanzenreihe (8) auf beiden Seiten und an der Oberseite umgibt, und dass an den Innenwaenden (12, 13) des kanalartigen Gehaeuses (14) auf die Pflanzenreihe (8) gerichtete Spruehduesen (15) angeordnet sind, die mit einem Leitungssystem (16) zur Zufuhr der zu verspruehenden Fluessigkeit in Verbindung stehen.

2. Vorrichtung, nach Anspruch 1, **dadurch gekennzeichnet**, dass fuer die Verschiebung der Bauteile der Spruehkammer (14) Arbeitszylinder vorgesehen sind, die vom Armaturenbrett des Fahrzeuges (3) aus betaetigbar sind.

3. Vorrichtung, nach Patentanspruch 1, **dadurch gekennzeichnet**, dass die Spruehkammer (14) aus zwei im wesentlichen L-foermig ausgebildeten Wandteilen (12, 13) besteht, die gemeinsam einen U-foermigen nach unten offenen Bewaesserungskanal (14) bilden.

4. Vorrichtung, nach Patentanspruch 1, **dadurch gekennzeichnet**, dass die unteren Enden der Gehaeusewaende (12, 13) nach innen gerichtete Fangkanaelen (19) aufweisen.

5. Vorrichtung, nach Patentanspruch 1, **dadurch gekennzeichnet**, dass die im Inneren des Tunnels (14) vorgesehene Duesen (15) einstellbar-verschwenkbar angeordnet sind.

6. Vorrichtung, nach Patentanspruch 1, **dadurch gekennzeichnet**, dass die unteren Teilstuecke (12a, 13a) der Waende (12, 13) teleskopartig verschiebbar vorgesehen sind.

7. Vorrichtung, nach Patentanspruch 1, **dadurch gekennzeichnet**, dass ein Handrad (22) und eine Gewindespindel (23) mit dem Rahmengestell (9) der Bewaesserungskammer (14) zur Verschwenkung der Kammer um einen Winekl (24) in Wirkverbindung stehen.

8. Vorrichtung, nach Patentanspruch 1, **dadurch gekennzeichnet**, dass dem aussenliegenden Wandteil (12) eine Stuetz- und Laufrolle (26) zugeordnet ist.

9. Vorrichtung, nach Patentanspruch 1, **dadurch gekennzeichnet**, dass die Rahmenteile (28, 29) um Schwenklager (30, 31) aus einer Arbeitsstellung in eine Ruhestellung und umgekehrt verschwenkbar sind.

10. Vorrichtung, nach Patentanspruch 1, **dadurch gekennzeichnet**, dass die Seitenwaende und der Kammerhimmel des Tunnels (14) durch Abdeckplanen (32, 33, 34), die am Gestelle (28, 29) angehaengt sind, wasserdicht abgeschlossen sind.

FIG.1

0 291 837

FIG.2

0 291 837

FIG. 3

0 291 837

FIG.4

FIG. 5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB - A - 2 038 154 (NATIONALE COOPERATIEVE AANEN) <br><br> * Fig. 1,9 * | 1 | A 01 G 25/09 |
| A | | 2,9 | |
| A | GB - A - 2 153 193 (JOHN PETT ENGINEERUNG LIMITED) <br><br> * Zusammenfassung; Fig. 1 * | 1,3,10 | |
| A | DE - A1 - 2 914 607 (HANNEMANN) <br><br> * Fig.; Ansprüche 1,4 * | 1,10 | |
| A | EP - A1 - 0 040 828 (PICK-PRO INTERNATIONAL INDUSTRIES) <br><br> * Zusammenfassung; Fig. 2; Seite 17, Zeilen 6-9 * | 1,5,8 | |

**EP 88107563.4**

RECHERCHIERTE SACHGEBIETE (Int. Cl.4)

A 01 G   9/00
A 01 G 25/00
B 05 B   1/00
B 05 B   3/00

Der vorliegende Recherchenbericht wurde für alle Patentansprüche erstellt.

| Recherchenort | Abschlußdatum der Recherche | Prüfer |
|---|---|---|
| WIEN | 20-07-1988 | RIEMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82